# EUROPEAN PATENT APPLICATION

(11) **EP 4 757 479 A1**
(43) Date of publication of application: **10.06.2026**
(21) Application number: 24858253.8
(22) Date of filing: 07.08.2024
(51) Int. Cl.: H04W 72/512

(54) **COMMUNICATION METHOD, COMMUNICATION APPARATUS, AND COMMUNICATION SYSTEM**

(30) Priority: 31.08.2023 CN 202311130187
(71) Applicant: HUAWEI TECHNOLOGIES CO., LTD., Shenzhen 518129 (CN)
(72) Inventor: MA, Yunsi, Shenzhen, Guangdong 518129 (CN); RUAN, Wei, Shenzhen, Guangdong 518129 (CN)
(74) Representative: Pfenning, Meinig & Partner mbB
(86) International application number: PCT/CN2024/110447
(87) International publication number: WO 2025/044710

(57) **Abstract**

This application provides a communication method, a communication apparatus, and a communication system. The method includes: allocating an uplink transmission resource to an LLT STA in a transmit opportunity window available for transmitting a non-low latency traffic frame, to transmit an uplink low latency traffic frame or a low latency traffic report frame, so as to implement preemption transmission of low latency traffic, ensure timely sending of the low latency traffic, and help improve user experience.

## Description

### CROSS-REFERENCE TO RELATED APPLICATIONS

This application claims priority to Chinese Patent Application No. 202311130187.2, filed with the China National Intellectual Property Administration on August 31, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

One of main objectives of a next generation wireless fidelity (wireless fidelity, Wi-Fi) protocol is how to reduce a traffic transmission latency. For example, a network device and a terminal device are performing transmission of a non-low latency traffic. When an uplink or downlink low latency traffic needs to be transmitted, how to ensure fast transmission of the low latency traffic needs to be resolved.

### SUMMARY

Embodiments of this application provide a communication method, a communication apparatus, and a communication system, to ensure timely sending of low latency traffic and improve user experience.

According to a first aspect, an embodiment of this application provides a communication method. The method may be performed by a network device or a module (for example, a chip) in the network device in a Wi-Fi system. The method includes: sending a first frame, where the first frame indicates a first uplink transmission resource; and receiving a first uplink low latency traffic frame or a low latency traffic report frame from at least one terminal device in a transmit opportunity window on the first uplink transmission resource, where the transmit opportunity window is available for transmitting a non-low latency traffic frame.

In the foregoing solution, an uplink transmission resource is allocated to a terminal device in the transmit opportunity window available for transmitting the non-low latency traffic frame, to transmit an uplink low latency traffic frame or a low latency traffic report frame, so as to implement preemption transmission of low latency traffic, ensure timely sending of the low latency traffic, and help improve user experience.

In a possible implementation method, the sending the first frame includes: sending the first frame in a first time period of the transmit opportunity window; and the receiving the first uplink low latency traffic frame from the at least one terminal device in the transmit opportunity window on the first uplink transmission resource includes: receiving the first uplink low latency traffic frame from the at least one terminal device in the first time period on the first uplink transmission resource, where a data amount of the first uplink low latency traffic frame is less than a first threshold.

In the foregoing solution, an uplink low latency traffic frame whose data amount is less than the first threshold may be sent in time, to help ensure timely sending of the low latency traffic.

In a possible implementation method, the low latency traffic report frame indicates a data amount of to-be-transmitted uplink low latency traffic; and the method further includes: sending a second frame in a second time period of the transmit opportunity window, where the second frame indicates a second uplink transmission resource, and the second uplink transmission resource is determined based on the low latency traffic report frame; and receiving a second uplink low latency traffic frame from the at least one terminal device in the second time period on the second uplink transmission resource, where the second uplink low latency traffic frame is used to transmit the to-be-transmitted uplink low latency traffic.

In the foregoing solution, the low latency traffic report frame first indicates the data amount of the to-be-transmitted uplink low latency traffic, and then the network device allocates an appropriate uplink transmission resource to the to-be-transmitted uplink low latency traffic, and indicates the terminal device to send the uplink low latency traffic frame on the allocated uplink transmission resource. This can ensure that the appropriate uplink transmission resource is allocated to the uplink low latency traffic, and help ensure correct sending of the low latency traffic.

In a possible implementation method, the method further includes: sending an aggregated frame to the at least one terminal device in the transmit opportunity window, where the aggregated frame includes an acknowledgment frame for the first uplink low latency traffic frame and an acknowledgment frame for the second uplink low latency traffic frame.

In a possible implementation method, the method further includes: sending a downlink low latency traffic frame in a third time period of the transmit opportunity window, where the downlink low latency traffic frame includes data of downlink low latency traffic and a transmission resource indication, and the transmission resource indication indicates a transmission resource for the data of the downlink low latency traffic.

In the foregoing solution, the downlink low latency traffic frame is sent to the terminal device in the transmit opportunity window available for transmitting the non-low latency traffic frame, to implement preemption transmission of the low latency traffic, ensure timely sending of the low latency traffic, and help improve user experience.

In a possible implementation method, the method further includes: sending a third frame in the transmit opportunity window, where the third frame carries a preemption transmission indication, and the preemption transmission indication indicates whether preemption transmission of low latency traffic is allowed after transmission of the third frame ends.

In the foregoing solution, the preemption transmission indication indicates, to the terminal device, whether preemption transmission of the low latency traffic is allowed after transmission of the downlink low latency traffic frame ends, to help the terminal device accurately determine whether preemption transmission of the uplink low latency traffic can be performed.

In a possible implementation method, a time period used to send an uplink low latency traffic frame or a low latency traffic report frame is present after each fixed quantity of non-low latency traffic frames in the transmit opportunity window.

In a possible implementation method, the transmit opportunity window does not include a frame indicating an uplink transmission resource other than the first frame.

In the foregoing solution, an uplink transmission resource is indicated to the terminal device only once in one transmit opportunity window. Subsequently, the terminal device sends data of the uplink low latency traffic by using the uplink transmission resource. In this way, signaling overheads can be reduced.

In a possible implementation method, the sending the first frame includes: sending the first frame before the transmit opportunity window.

In the foregoing solution, an uplink transmission resource is indicated to the terminal device once before the transmit opportunity window. Subsequently, the terminal device sends data of the uplink low latency traffic by using the uplink transmission resource, and there is no need to indicate the uplink transmission resource to the terminal device in the transmit opportunity window. In this way, signaling overheads can be reduced.

In a possible implementation method, the method further includes: sending a beacon frame to the at least one terminal device, where the beacon frame indicates that preemption transmission of the low latency traffic is supported in the transmit opportunity window.

In a possible implementation method, the method further includes: sending a management frame, where the management frame is used to negotiate whether preemption transmission of the low latency traffic is supported in the transmit opportunity window; and
receiving a response frame, where the response frame indicates that preemption transmission of the low latency traffic is supported in the transmit opportunity window.

In a possible implementation method, the method further includes: receiving a management frame, where the management frame indicates that preemption transmission of the low latency traffic is supported in the transmit opportunity window.

In a possible implementation method, if the network device is an initiator of the transmit opportunity window, preemption transmission of a downlink low latency traffic frame sent by the network device is capable of being performed between any two downlink non-low latency traffic frames, and preemption transmission of an uplink low latency traffic frame received by the network device is performed only in a specified time period of the transmit opportunity window.

In a possible implementation method, the method further includes: sending a fourth frame in the specified time period, where the fourth frame is used to request the at least one terminal device to report a low latency traffic report.

In a possible implementation method, the fourth frame further indicates a next specified time period.

In a possible implementation method, if the network device is an initiator of the transmit opportunity window, a non-low latency traffic frame sent by the network device is capable of being interrupted, to perform preemption transmission of a low latency traffic frame, and after transmission of the low latency traffic frame is completed, the non-low latency traffic frame continues to be transmitted.

In a possible implementation method, a plurality of non-low latency traffic frames are present between two adjacent specified time periods in the transmission active window, a 1^{st} non-low latency traffic frame in the plurality of non-low latency traffic frames includes a complete preamble symbol, and another non-low latency traffic frame in the plurality of non-low latency traffic frames includes a truncated preamble symbol.

According to a second aspect, an embodiment of this application provides a communication method. The method may be performed by a network device or a module (for example, a chip) in the network device in a Wi-Fi system. The method includes: sending a communication frame to at least one terminal device in a transmit opportunity window, where the communication frame includes indication information and downlink low latency traffic data, the indication information indicates a transmission resource for the downlink low latency traffic data, and the transmit opportunity window is available for transmitting a non-low latency traffic frame.

According to a third aspect, an embodiment of this application provides a communication method. The method may be performed by a terminal device or a module (for example, a chip) in the terminal device in a Wi-Fi system. The method includes: receiving a first frame, where the first frame indicates a first uplink transmission resource; and sending a first uplink low latency traffic frame or a low latency traffic report frame in a transmit opportunity window on the first uplink transmission resource, where the transmit opportunity window is available for transmitting a non-low latency traffic frame.

In a possible implementation method, the receiving the first frame includes: receiving the first frame in a first time period of the transmit opportunity window; and the sending the first uplink low latency traffic frame in the transmit opportunity window on the first uplink transmission resource includes: sending the first uplink low latency traffic frame in the first time period on the first uplink transmission resource, where a data amount of the first uplink low latency traffic frame is less than a first threshold.

In a possible implementation method, the low latency traffic report frame indicates a data amount of to-be-transmitted uplink low latency traffic; and the method further includes: receiving a second frame in a second time period of the transmit opportunity window, where the second frame indicates a second uplink transmission resource, and the second uplink transmission resource is determined based on the low latency traffic report frame; and sending a second uplink low latency traffic frame in the second time period on the second uplink transmission resource, where the second uplink low latency traffic frame is used to transmit the to-be-transmitted uplink low latency traffic.

In a possible implementation method, the method further includes: receiving an aggregated frame in the transmit opportunity window, where the aggregated frame includes an acknowledgment frame for the first uplink low latency traffic frame and an acknowledgment frame for the second uplink low latency traffic frame.

In a possible implementation method, the method further includes: receiving a downlink low latency traffic frame in a third time period of the transmit opportunity window, where the downlink low latency traffic frame includes data of downlink low latency traffic and a transmission resource indication, and the transmission resource indication indicates a transmission resource for the data of the downlink low latency traffic.

In a possible implementation method, the method further includes: receiving a third frame in the transmit opportunity window, where the third frame carries a preemption transmission indication, and the preemption transmission indication indicates whether preemption transmission of low latency traffic is allowed after transmission of the third frame ends.

In a possible implementation method, a time period used to send an uplink low latency traffic frame or a low latency traffic report frame is present after each fixed quantity of non-low latency traffic frames in the transmit opportunity window.

In a possible implementation method, the transmit opportunity window does not include a frame indicating an uplink transmission resource other than the first frame.

In a possible implementation method, the receiving the first frame includes: receiving the first frame before the transmit opportunity window.

In a possible implementation method, the method further includes: receiving a beacon frame, where the beacon frame indicates that preemption transmission of the low latency traffic is supported in the transmit opportunity window.

In a possible implementation method, the method further includes: receiving a management frame, where the management frame is used to negotiate whether preemption transmission of the low latency traffic is supported in the transmit opportunity window; and sending a response frame, where the response frame indicates that preemption transmission of the low latency traffic is supported in the transmit opportunity window.

In a possible implementation method, the method further includes: sending a management frame, where the management frame indicates that preemption transmission of the low latency traffic is supported in the transmit opportunity window.

In a possible implementation method, if the terminal device is an initiator of the transmit opportunity window, preemption transmission of a low latency traffic frame received or sent by the terminal device is capable of being performed between any two non-low latency traffic frames, and preemption transmission of another low latency traffic frame is performed only in a specified time period of the transmit opportunity window.

In a possible implementation method, if the terminal device is an initiator of the transmit opportunity window, a non-low latency traffic frame sent by the terminal device is capable of being interrupted, to perform preemption transmission of a low latency traffic frame, and after transmission of the low latency traffic frame is completed, the non-low latency traffic frame continues to be transmitted.

In a possible implementation method, a plurality of non-low latency traffic frames are present between two adjacent specified time periods in the transmission active window, a 1^{st} non-low latency traffic frame in the plurality of non-low latency traffic frames includes a complete preamble symbol, and another non-low latency traffic frame in the plurality of non-low latency traffic frames includes a truncated preamble symbol.

For beneficial effects of the implementation method of the terminal device, refer to the beneficial effects of the implementation method of the network device.

According to a fourth aspect, an embodiment of this application provides a communication apparatus. The apparatus may be a network device, or may be a module (for example, a chip) in the network device. The apparatus has a function of implementing any one of the implementation methods in the first aspect and the second aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a terminal device, or may be a module (for example, a chip) in the terminal device. The apparatus has a function of implementing any one of the implementation methods of the third aspect. The function may be implemented by hardware, or may be implemented by hardware executing corresponding software. The hardware or the software includes one or more modules corresponding to the function.

According to a sixth aspect, an embodiment of this application provides a communication apparatus, including a unit or a means (means) configured to perform steps of any one of the implementation methods in the first aspect to the third aspect.

According to a seventh aspect, an embodiment of this application provides a communication apparatus, including a processor and an interface circuit. The processor is configured to communicate with another apparatus through the interface circuit, and perform any one of the implementation methods in the first aspect to the third aspect. There are one or more processors.

Optionally, the communication apparatus may further include a memory configured to store computer instructions. The memory is coupled to the processor, and the processor executes the computer instructions stored in the memory, so that the apparatus performs any one of the implementation methods in the first aspect to the third aspect.

According to an eighth aspect, an embodiment of this application further provides a computer program product. The computer program product includes a computer program or instructions. When the computer program or the instructions are run on a communication apparatus, any one of the implementation methods in the first aspect to the third aspect is performed.

According to a ninth aspect, an embodiment of this application further provides a computer-readable storage medium. The computer-readable storage medium stores instructions, and when the instructions are run on a communication apparatus, any one of the implementation methods in the first aspect to the third aspect is performed.

According to a tenth aspect, an embodiment of this application further provides a chip system, including a processor, configured to perform any one of the implementation methods in the first aspect to the third aspect.

According to an eleventh aspect, an embodiment of this application further provides a communication system, including a network device configured to perform any one of the implementation methods in the first aspect and a terminal device configured to perform any one of the implementation methods in the third aspect.

### BRIEF DESCRIPTION OF DRAWINGS

FIG. 1 is a diagram of an architecture of a communication system to which embodiments of this application are applied;
FIG. 2 is an example diagram of a preemption transmission method for low latency traffic in a single-user scenario according to an embodiment of this application;
FIG. 3 is a diagram of a communication method according to an embodiment of this application;
FIG. 4(a) is a diagram of an equal-interval preemption transmission solution;
FIG. 4(b) is another diagram of an equal-interval preemption transmission solution;
FIG. 5 is a diagram of flexibly adjusting a PSP interval in an equal-interval preemption transmission solution;
FIG. 6 is a diagram of reducing a quantity of trigger frames in an equal-interval preemption transmission solution;
FIG. 7 is a diagram of an unequal-interval preemption transmission solution;
FIG. 8 is another diagram of an unequal-interval preemption transmission solution;
FIG. 9 is a diagram of an RPD solution;
FIG. 10 is another diagram of an RPD solution;
FIG. 11 is another diagram of an RPD solution;
FIG. 12 is an example diagram of allocation of an uplink transmission resource in a PSP;
FIG. 13 is a diagram of a pattern-based RU allocation solution;
FIG. 14 is a diagram of a structure of a communication apparatus according to an embodiment of this application; and
FIG. 15 is a diagram of a structure of a communication apparatus according to an embodiment of this application.

### DESCRIPTION OF EMBODIMENTS

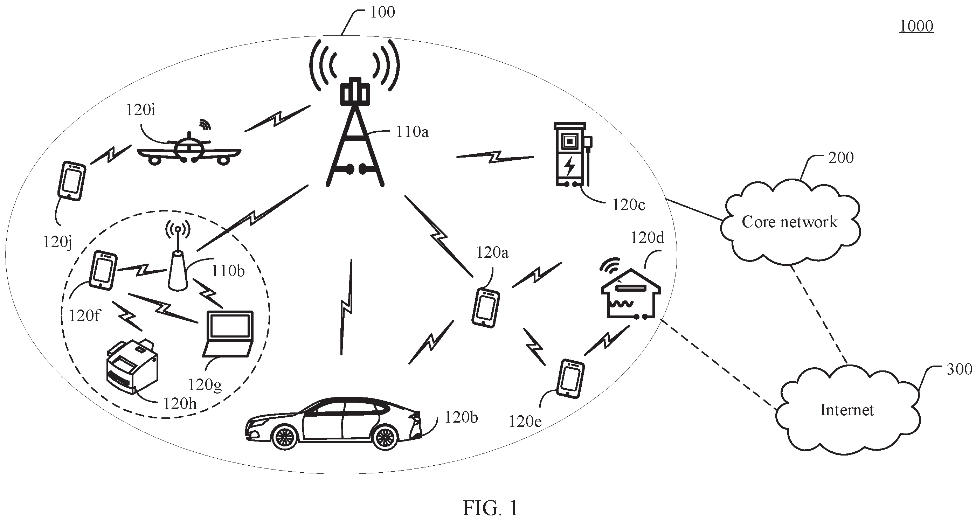

FIG. 1 is a diagram of an architecture of a communication system to which embodiments of this application are applied. The communication system 1000 shown in FIG. 1 includes a radio access network 100 and a core network 200. Optionally, the communication system 1000 further includes an internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. Terminal devices may be connected to each other and network devices may be connected to each other in a wired or wireless manner. FIG. 1 is merely a diagram. The communication system may further include other network devices, for example, may further include a wireless relay device and a wireless backhaul device, which are not shown in FIG. 1.

The network device is an access device used by the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access point (access point, AP) in a Wi-Fi system, or the like, or may be a module or a unit that completes some functions of the base station, for example, may be a central unit (central unit, CU), a distributed unit (distributed unit, DU), or a radio unit (radio unit, RU). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device includes but is not limited to a terminal apparatus, a terminal, user equipment (user equipment, UE), a mobile station, a mobile terminal, a station (station, STA), and the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be specifically a mobile phone, a tablet computer, a computer with a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other according to a radio air interface protocol. Certainly, 110a and 120i may alternatively communicate with each other according to an interface protocol between network devices. In this case, compared with 110a, 120i is also a network device. Therefore, the network device and the terminal device may be collectively referred to as a communication apparatus. 110a and 110b in FIG. 1 may be referred to as a communication apparatus with a function of a network device, and 120a to 120j in FIG. 1 may be referred to as a communication apparatus with a function of a terminal device.

Communication may be performed between a network device and a terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection to a cell controlled by the network device. The cell that establishes the wireless connection to the terminal device is referred to as a serving cell of the terminal device.

For ease of description, in this application, a STA and an AP are used as examples of the terminal device and the network device respectively for description subsequently. In other words, the STA and the AP that appear subsequently may be replaced with the terminal device and the network device respectively.

In embodiments of this application, a non-AP device used to transmit low latency traffic (low latency traffic, LLT) is referred to as an LLT STA, and a non-AP device used to transmit non-low latency traffic is referred to as a non-LLT STA.

When a communication frame sent by the LLT STA to an AP carries data of uplink low latency traffic, the communication frame may also be referred to as an uplink low latency traffic frame. When a communication frame sent by an AP to the LLT STA carries data of downlink low latency traffic, the communication frame may also be referred to as a downlink low latency traffic frame. For example, when the communication frame is a physical layer protocol data unit (physical protocol data unit, PPDU), the communication frame may also be represented as an LLT PPDU, and specifically includes an uplink (uplink, UL) LLT PPDU and a downlink (downlink, DL) LLT PPDU.

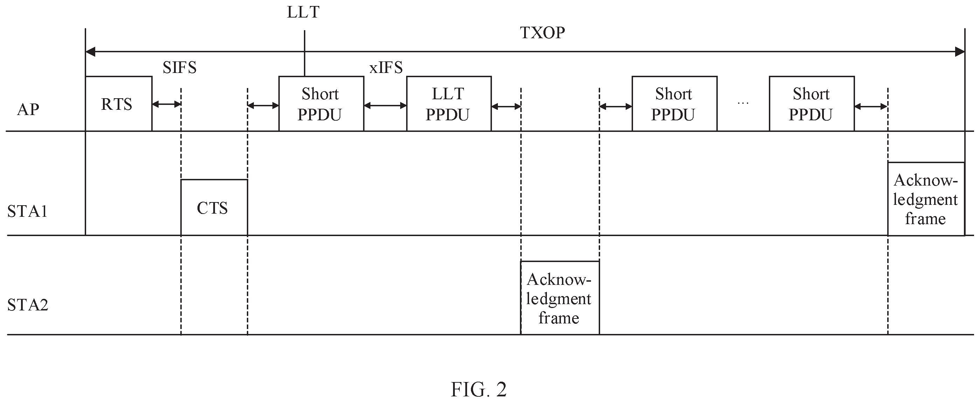

FIG. 2 is an example diagram of a preemption transmission method for low latency traffic in a single-user scenario according to an embodiment of this application. A STA1 transmits only non-low latency traffic (non-LLT), and a STA2 transmits low latency traffic (LLT), in other words, the STA1 is a non-LLT STA, and the STA2 is an LLT STA. In a transmit opportunity (transmit opportunity, TXOP) window (TXOP for short below), non-LLT data is transmitted between an AP and the STA1. In the TXOP, even if there is high-priority LLT data to be sent, the AP cannot transmit the LLT to the STA2 in time, and needs to wait until transmission of a non-LLT PPDU of the STA1 ends. Consequently, excessively long duration of the non-LLT PPDU of the STA1 causes a significant increase in an LLT transmission latency. To reduce the LLT transmission latency, the AP divides a long non-LLT PPDU of the STA1 into a plurality of short non-LLT PPDUs, namely, short PPDUs in FIG. 2, and a new interframe space xIFS is introduced, so that the STA2 is allowed to preempt a channel in the xIFS of the short non-LLT PPDU to transmit the LLT. As shown in FIG. 2, after buffering the LLT data, the AP suspends transmission of the short non-LLT PPDU to the STA1, and transmits an LLT PPDU to the STA2 after the xIFS elapses. In addition, to reduce overheads of an acknowledgment frame, the STA1 replies with an acknowledgment frame only after receiving all short non-LLT PPDUs, which significantly increases a latency in replying with the acknowledgment frame. Moreover, after receiving an LLT PPDU, the STA2 also replies with an acknowledgment frame. The acknowledgment frame may be a block acknowledgment (block acknowledgment, BA) frame, or may be an ACK frame. In FIG. 2, SIFS indicates a short interframe space (short interframe space), RTS indicates request to send (request to send), and CTS indicates clear to send (clear to send).

The foregoing solution has the following problems:
First, the non-LLT STA (for example, the STA1) waits for excessively long time to reply with the acknowledgment frame, and therefore cannot request retransmission of erroneous data in time.
Second, transmission duration of the short PPDU and the LLT PPDU is variable, and the LLT is allowed to preempt the channel between the plurality of short PPDUs. As a result, reply time of the acknowledgment frame is uncontrollable.
Third, only a case in which a single user has the low latency traffic is considered, and a scenario in which a plurality of users contend for transmitting the low latency traffic is not considered.

Therefore, how to design an appropriate preemption transmission method for low latency traffic to implement efficient sending of a plurality of pieces of low latency traffic needs to be resolved.

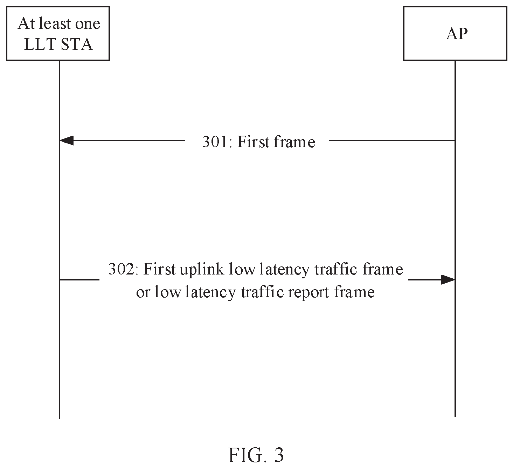

FIG. 3 is a diagram of a communication method according to an embodiment of this application. The method is performed by a terminal device (for example, an LLT STA and a non-LLT STA) or a module (for example, a chip) used in the terminal device, and a network device (for example, an AP) or a module (for example, a chip) used in the network device. For ease of description, the following uses an example in which the AP, the LLT STA, and the non-LLT STA perform the method for description.

The method includes the following steps.
Step 301: The AP sends a first frame. Correspondingly, at least one LLT STA receives the first frame.

The first frame indicates a first uplink transmission resource. Specifically, the first uplink transmission resource may include a frequency domain resource, or include a time domain resource and a frequency domain resource.

The first uplink transmission resource may include a transmission resource (for example, one or more resource units (resource unit, RU)) exclusively occupied by the at least one LLT STA and/or a shared resource. For example, the first uplink transmission resource includes an exclusive resource of an LLT STA1, an exclusive resource of an LLT STA2, and the shared resource. The exclusive resource of the LLT STA1 is exclusively used by the LLT STA1, the exclusive resource of the LLT STA2 is exclusively used by the LLT STA2, and the shared resource may be used by the LLT STA1, the LLT STA2, and another LLT STA through contention.

Step 302: The at least one LLT STA sends a first uplink low latency traffic frame or a low latency traffic report frame to the AP in a transmit opportunity (TXOP) window on the first uplink transmission resource. Correspondingly, the AP receives the first uplink low latency traffic frame or the low latency traffic report frame.

The transmit opportunity window is available for transmitting a non-low latency traffic frame (non-LLT STA). The low latency traffic report frame indicates a data amount of to-be-transmitted uplink low latency traffic. Optionally, the low latency traffic report frame further indicates a traffic type and/or a traffic priority of the to-be-transmitted uplink low latency traffic. For example, the low latency traffic report frame includes at least one of a bandwidth query report (bandwidth query report, BQR) frame, a buffer status report (buffer status report, BSR) frame, and a null data packet (null data packet, NDP) feedback report (NDP feedback report, NFR) frame.

An example in which the first uplink transmission resource includes the exclusive resource of the LLT STA1, the exclusive resource of the LLT STA2, and the shared resource is used. The LLT STA1 may send a first uplink low latency traffic frame or a low latency traffic report frame to the AP on the exclusive resource of the LLT STA1 and/or the shared resource. The first uplink low latency traffic frame sent by the LLT STA1 includes uplink low latency traffic or data of the uplink low latency traffic of the LLT STA1. The low latency traffic report frame sent by the LLT STA1 indicates a data amount of uplink low latency traffic to be transmitted by the LLT STA1. The LLT STA2 may send a first uplink low latency traffic frame or a low latency traffic report frame to the AP on the exclusive resource of the LLT STA2 and/or the shared resource. The first uplink low latency traffic frame sent by the LLT STA2 includes uplink low latency traffic or data of the uplink low latency traffic of the LLT STA2. The low latency traffic report frame sent by the LLT STA2 indicates a data amount of uplink low latency traffic to be transmitted by the LLT STA2.

In the foregoing solution, an uplink transmission resource is allocated to an LLT STA in the transmit opportunity window available for transmitting the non-low latency traffic frame, to transmit an uplink low latency traffic frame or a low latency traffic report frame, so as to implement preemption transmission of low latency traffic, ensure timely sending of the low latency traffic, and help improve user experience.

In a possible implementation method, step 301 is specifically: The AP sends the first frame in a first time period of the TXOP; and correspondingly, step 302 is specifically: The AP receives the first uplink low latency traffic frame from the at least one LLT STA in the first time period of the TXOP on the first uplink transmission resource, where a data amount of the first uplink low latency traffic frame is less than a first threshold. It may be understood as that the at least one LLT STA sends a small amount of data of the low latency traffic to the AP in the first time period on the first uplink transmission resource. Optionally, after receiving the first uplink low latency traffic frame, the AP sends an acknowledgment frame (for example, a BA frame) for the first uplink low latency traffic frame to the at least one LLT STA.

In a possible implementation method, if the at least one LLT STA sends the low latency traffic report frame to the AP in the TXOP on the first uplink transmission resource in step 302, after receiving the low latency traffic report frame, the AP determines a second uplink transmission resource based on the low latency traffic report frame, and sends a second frame to the at least one LLT STA in a second time period of the TXOP, where the second frame indicates the second uplink transmission resource; and then the at least one LLT STA sends a second uplink low latency traffic frame to the AP in the second time period of the TOXP on the second uplink transmission resource, where the second uplink low latency traffic frame is used to transmit the to-be-transmitted uplink low latency traffic. Optionally, a data amount of the second uplink low latency traffic frame is greater than or equal to the first threshold. For example, when the LLT STA needs to send a large amount of data of low latency traffic (that is, a data amount of the low latency traffic is greater than or equal to the first threshold) to the AP, the LLT STA may first send a low latency traffic report frame to the AP, the AP then allocates a sufficient uplink transmission resource, that is, the second uplink transmission resource, to the LLT STA based on the low latency traffic report frame, and then the LLT STA sends the large amount of data of the low latency traffic on the second uplink transmission resource. In this way, it can be ensured that data of the low latency traffic is correctly sent. Optionally, after receiving the second uplink low latency traffic frame, the AP sends an acknowledgment frame (for example, a BA frame) for the second uplink low latency traffic frame to the at least one LLT STA. In the implementation method, the first time period may be a time period before the second time period, and there may be a time interval between the first time period and the second time period, or the first time period and the second time period may be consecutive. Alternatively, the first time period and the second time period are a same time period.

In a possible implementation method, when sending an acknowledgment frame for a received uplink low latency traffic frame to the terminal device, the AP may aggregate a plurality of acknowledgment frames into one frame (referred to as an aggregated frame) for sending. For example, the AP sends an aggregated frame to the at least one terminal device in the transmit opportunity window, where the aggregated frame includes the acknowledgment frame for the first uplink low latency traffic frame and the acknowledgment frame for the second uplink low latency traffic frame.

In a possible implementation method, the AP may further send a downlink low latency traffic frame to the at least one LLT STA in a third time period of the TXOP, where the downlink low latency traffic frame includes data of downlink low latency traffic and a transmission resource indication, and the transmission resource indication indicates a transmission resource for the data of the downlink low latency traffic. The third time period may be the same time period as the first time period or the second time period, or may be different from both the first time period and the second time period.

In a possible implementation method, a third frame is sent in the transmit opportunity window. The third frame may be a data frame (for example, an uplink/downlink low latency traffic frame or an uplink/downlink non-low latency traffic frame) or a control frame. The third frame carries a preemption transmission indication, and the preemption transmission indication indicates whether preemption transmission of low latency traffic is allowed after transmission of the third frame ends. Therefore, the LLT STA may determine, based on the preemption transmission indication, whether data of the uplink low latency traffic can be sent in a preemption manner after the third frame.

In a possible implementation method, a time period used to send an uplink low latency traffic frame or a low latency traffic report frame is present after each fixed quantity of non-low latency traffic frames in one TXOP. It may be understood as that, a preemption transmission window is present after the AP sends a fixed quantity of non-low latency traffic frames each time. In the preemption transmission window, the AP may send the downlink low latency traffic frame to the LLT STA, or the LLT STA sends the uplink low latency traffic frame to the AP.

In a possible implementation method, in one TXOP, only the first frame used for the first uplink transmission resource is present, and a frame indicating an uplink transmission resource other than the first frame is absent. It may be understood as that in one TXOP, an uplink transmission resource is indicated to the LLT STA only once, and subsequently, the LLT STA sends data of the uplink low latency traffic by using the uplink transmission resource. In this way, signaling overheads can be reduced.

In a possible implementation method, the first frame sent in step 301 may be sent before the TXOP. In other words, an uplink transmission resource is indicated to the LLT STA once before the TXOP. Subsequently, the LLT STA sends data of the uplink low latency traffic by using the uplink transmission resource, and there is no need to indicate the uplink transmission resource to the LLT STA in the TXOP. In this way, signaling overheads can be reduced.

In a possible implementation method, before step 301, the AP sends a beacon (Beacon) frame to the at least one LLT STA, where the beacon frame indicates that preemption transmission of the low latency traffic is supported in the TXOP. In other words, the AP decides to support preemption transmission of the low latency traffic in a TXOP, and then notifies the LLT STA by using the beacon frame.

In another implementation method, before step 301, the AP sends a management frame to the at least one LLT STA, where the management frame is used to negotiate whether preemption transmission of the low latency traffic is supported in the TXOP; and if determining that preemption transmission of the low latency traffic is supported in the TXOP, the at least one LLT STA sends a response frame to the AP, where the response frame indicates that preemption transmission of the low latency traffic is supported in the TXOP.

In another possible implementation method, before step 301, the LLT STA sends a management frame to the AP, where the management frame indicates that preemption transmission of the low latency traffic is supported in the TXOP. In other words, the LLT STA decides to support preemption transmission of the low latency traffic in a TXOP, and then notifies the AP by using the management frame.

In a possible implementation method, if the AP is an initiator of the transmit opportunity window, preemption transmission of a downlink low latency traffic frame sent by the AP is capable of being performed between any two downlink non-low latency traffic frames, and preemption transmission of an uplink low latency traffic frame received by the AP is performed only in a specified time period of the transmit opportunity window. Optionally, the AP sends a fourth frame in the specified time period, where the fourth frame is used to request the at least one terminal device to report a low latency traffic report. Optionally, the fourth frame further indicates a next specified time period. The time period herein is also referred to as a preemption service period (preemption service period, PSP), and the PSP provides an uplink and/or downlink preemption transmission time window for the LLT STA, to ensure a latency requirement of the low latency traffic.

In a possible implementation method, if the AP is an initiator of the transmit opportunity window, a non-low latency traffic frame sent by the AP is capable of being interrupted, to perform preemption transmission of a low latency traffic frame, and after transmission of the low latency traffic frame is completed, the non-low latency traffic frame continues to be transmitted.

In a possible implementation method, if the STA (for example, the LLT STA or the non-LLT STA) is an initiator of the transmit opportunity window, preemption transmission of a low latency traffic frame received or sent by the LLT STA is capable of being performed between any two non-low latency traffic frames, and preemption transmission of another low latency traffic frame is performed only in a specified time period of the transmit opportunity window.

In a possible implementation method, if the STA (for example, the LLT STA or the non-LLT STA) is an initiator of the transmit opportunity window, a non-low latency traffic frame sent by the non-LLT STA is capable of being interrupted, so that the LLT STA performs preemption transmission of a low latency traffic frame, and after transmission of the low latency traffic frame is completed, the non-LLT STA continues to transmit the non-low latency traffic frame.

In a possible implementation method, a plurality of non-low latency traffic frames are present between two adjacent specified time periods in the transmission active window, a 1^{st} non-low latency traffic frame in the plurality of non-low latency traffic frames includes a complete preamble symbol, and another non-low latency traffic frame in the plurality of non-low latency traffic frames includes a truncated preamble symbol. In this way, signaling overheads can be reduced.

In this embodiment of this application, preemption transmission may be supported or may not be supported in the TXOP, and whether preemption transmission is supported in the TXOP needs to be determined based on a dynamic indication. The following describes four different implementations in which the AP notifies whether preemption transmission is supported in the TXOP.

Implementation 1: The AP sends a beacon (Beacon) frame. A preemption transmission enabling/support indication, for example, a 1-bit Preemption Support subfield, is added to the beacon frame, to indicate whether preemption transmission of the low latency traffic is enabled/supported in the TXOP. For example, if Preemption Support is set to 1, it indicates that preemption transmission is supported in all TXOPs or a TXOP initiated by the AP in a current basic service set (basic service set, BSS). Alternatively, if Preemption Support is set to 1, it indicates that the current AP supports preemption transmission of the low latency traffic. If a preemption transmission function needs to be enabled, additional signaling is needed for indication.

Implementation 2: In the TXOP, an initiator and a receiver of the TXOP exchange management frames, and negotiate to support/reject preemption transmission of the low latency traffic in the current TXOP.

Implementation 3: In the TXOP, an initiator of the TXOP sends a control frame or a management frame, such as an RTS frame, carrying a preemption transmission indication, to notify that preemption transmission of the low latency traffic is supported/rejected in the current TXOP, and may also be used to notify a transmission preemption parameter.

Implementation 4: Outside the TXOP, the AP sends a management frame to indicate to enable/disable preemption transmission; or in the TXOP, an initiator of the TXOP sends a management frame to notify that preemption transmission is supported/rejected in the current TXOP. If preemption transmission is enabled, before the AP notifies that the function is disabled, preemption transmission is supported all TXOPs or a TXOP initiated by the AP in a current BSS. The management frame may be further used to notify a preemption transmission parameter, for example, a PSP parameter. If the management frame is an independent addressing frame or a group addressing frame, the receiver needs to reply with a response frame. If the management frame is a broadcast frame, the receiver may not need to reply with a response frame.

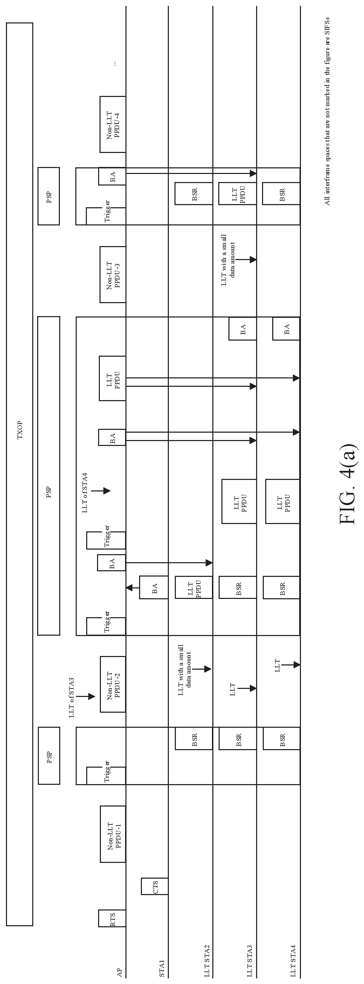

The following describes the method embodiment in FIG. 3 with reference to the accompanying drawings. In the following examples in FIG. 4(a), FIG. 4(b), and FIG. 5 to FIG. 13, an LLT PPDU sent by an AP is a specific example of a downlink low latency traffic frame, an LLT PPDU sent by an LLT STA is a specific example of an uplink low latency traffic frame, a non-LLT PPDU sent by the AP is a specific example of a downlink non-low latency traffic frame, and a BSR frame sent by the LLT STA is a specific example of a low latency traffic report frame. A STA1 is a non-LLT STA, and a STA2 to a STA4 are LLT STAs. In a TXOP, a long non-LLT PPDU sent by the AP to the STA1 is divided into a plurality of short non-LLT PPDUs for transmission, and an interframe space is an SIFS. In the following example, a preemption service period (PSP) is obtained through division, and an uplink and/or downlink preemption transmission time window is provided for the LLT STA, to ensure a latency requirement of low latency traffic. The PSP may be the first time period, the second time period, or the third time period in the embodiment in FIG. 3, or a combination of any two or three of the first time period, the second time period, or the third time period. In the PSP, the LLT STA may send a low latency traffic report frame (such as a BSR frame), an uplink low latency traffic frame (such as an LLT PPDU), and an acknowledgment frame (such as a BA frame) for a received downlink low latency traffic frame, and the AP may send the downlink low latency traffic frame (such as an LLT PPDU) and an acknowledgment frame for the received uplink low latency traffic frame. In addition, in the PSP, the non-LLT STA may send an acknowledgment frame for a received downlink non-low latency traffic frame (such as a non-LLT PPDU) to the AP. The following embodiments support multi-user preemption transmission, and provide a flexible mechanism for reporting an acknowledgment frame for a non-LLT PPDU.

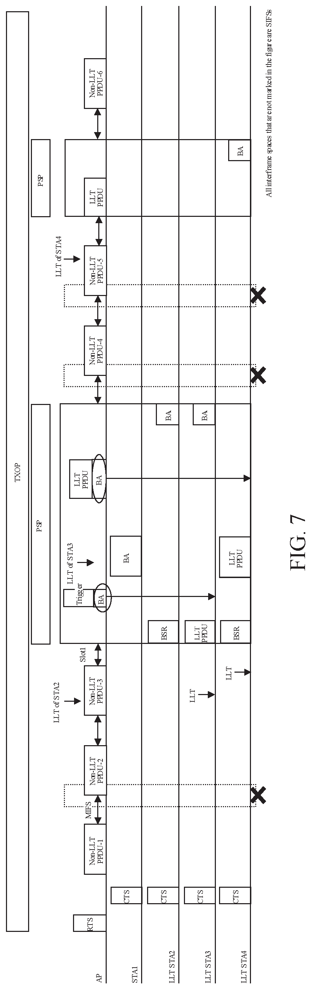

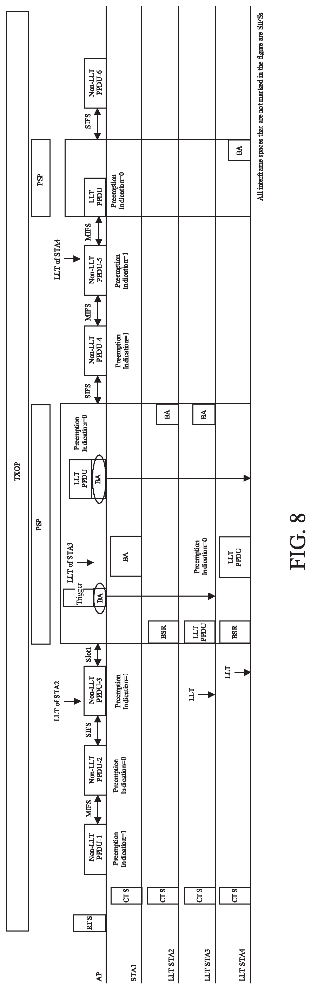

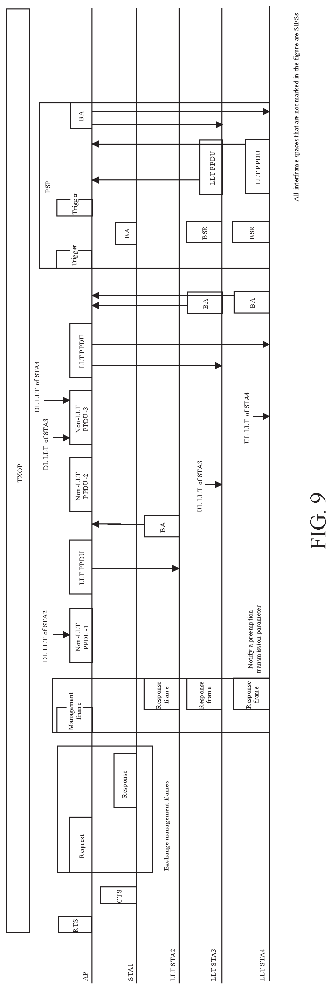

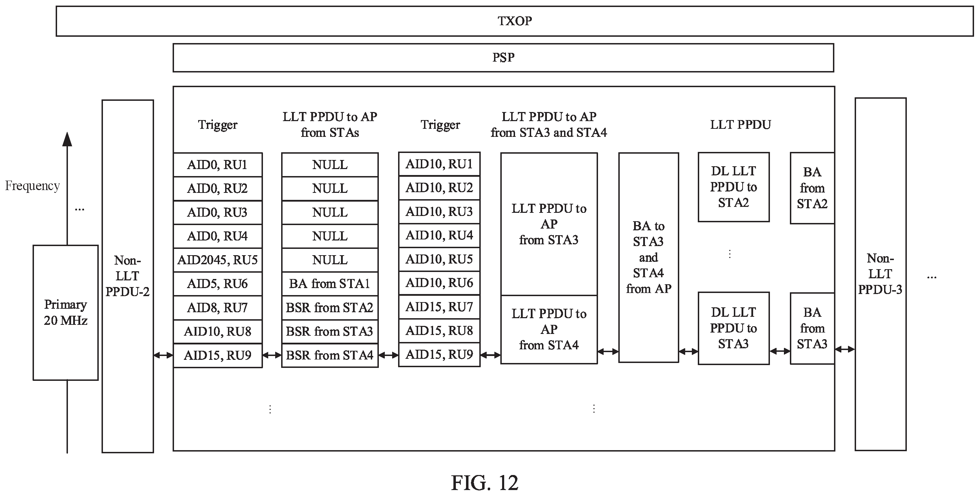

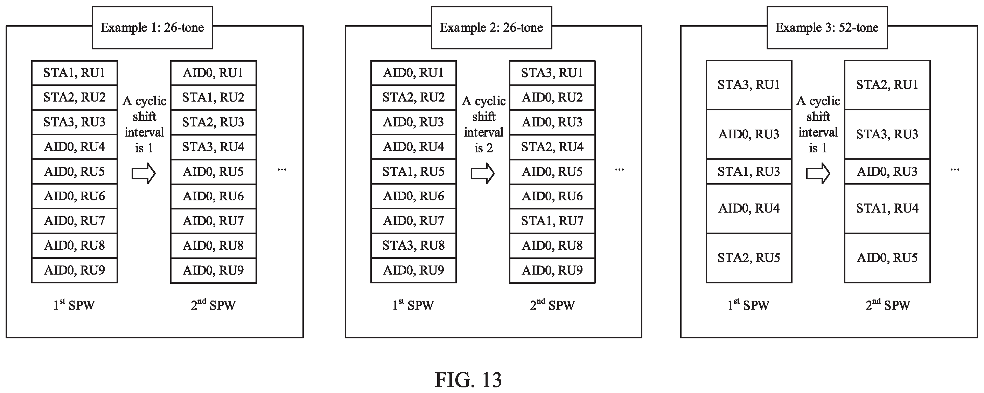

The following describes four parts. A first part includes an equal-interval preemption transmission solution, and relates to FIG. 4(a), FIG. 4(b), FIG. 5, and FIG. 6. A second part includes an unequal-interval preemption transmission solution, and relates to FIG. 7 and FIG. 8. A third part includes a restricted preemption delivery (restricted preemption delivery, RPD) solution, and relates to FIG. 9 to FIG. 11. A fourth part includes a resource allocation solution in a PSP, and relates to FIG. 12 and FIG. 13. It should be noted that the following four parts may be separately implemented, or may be implemented in combination with each other.

### First part: Equal-interval transmission solution

FIG. 4(a) is a diagram of an equal-interval preemption transmission solution. In this example, one PSP is inserted at an interval of a specified quantity of non-LLT PPDUs. A user is allowed to flexibly configure a PSP interval (for example, a quantity of non-LLT PPDUs used as an interval), or a PSP interval is specified in a protocol (that is, the PSP interval is statically configured).

In each PSP, the AP sends a trigger frame, to configure an uplink transmission resource, a related parameter, and the like of the STA (including the LLT STA and/or the non-LLT STA). In each PSP, the non-LLT STA (for example, the STA1) may report a BA frame for a received non-LLT PPDU, to resolve a problem of an excessively long latency in replying with an acknowledgment frame in an existing mechanism.

In each PSP, the AP allocates a specified uplink transmission resource (for example, one or more RUs) to the LLT STA, and the LLT STA reports a BSR frame based on the specified uplink transmission resource, or transmits a small amount of UL LLT data (that is, an uplink LLT PPDU). Specifically, when a data amount of UL LLT is small, the LLT STA may send the uplink LLT PPDU by using the specified uplink transmission resource or a shared uplink transmission resource, and does not need to report the BSR frame. In this case, the AP does not need to additionally transmit a trigger frame to schedule the LLT STA to send the uplink LLT PPDU. For example, after receiving the trigger frame in a 2^{nd} PSP in FIG. 4(a), the LLT STA2 sends an LLT PPDU based on the uplink transmission resource adjusted by using the trigger.

When a data amount of UL LLT is large (that is, the UL LLT cannot be completely transmitted in an uplink transmission frame with a length specified by the trigger frame), the LLT STA reports the BSR frame by using the specified uplink transmission resource. After receiving the BSR frame, the AP centrally allocates uplink transmission resources based on UL LLT buffered by different LLT STAs. In the PSP, after the AP receives the BSR frame, the AP transmits the trigger frame after an interval of the SIFS, to notify the STA of the uplink transmission resource, the related parameter, and the like. The LLT STA receives the trigger frame, and sends, based on the uplink transmission resource allocated by the AP, the LLT PPDU that carries the UL LLT data. After receiving the uplink LLT PPDU, the AP replies with the BA frame after an interval of the SIFS. If the AP has buffered DL LLT data, after transmitting the BA frame, the AP may send an LLT PPDU after an interval of the SIFS, where the LLT PPDU carries the DL LLT data. For example, in the 2^{nd} PSP in FIG. 4(a), the LLT STA3 and the LLT STA4 first report a BSR, and then the AP sends a trigger frame to allocate an uplink transmission resource. The LLT STA3 and the LLT STA4 separately send an LLT PPDU on the allocated uplink transmission resource, and then the AP separately sends a BA frame to the LLT STA3 and the LLT STA4 in the PSP. In addition, because the AP has buffered DL LLT data of the LLT STA3 and the LLT STA4, after sending the BA frame, the AP may then send an LLT PPDU to the LLT STA3 and the LLT STA4, where the LLT PPDU carries the DL LLT data. Then, the LLT STA3 and the LLT STA4 separately send a BA frame to the AP.

In the PSP, if the AP allocates the uplink transmission resource to the non-LLT STA, after receiving the trigger frame, the non-LLT STA may send, to the AP, a BA frame in response to a previously received non-LLT PPDU. For example, the STA1 in FIG. 4(a) sends BA frames for a non-LLT PPDU1 and a non-LLT PPDU2 to the AP in the 2^{nd} PSP based on the uplink transmission resource allocated by using the trigger frame.

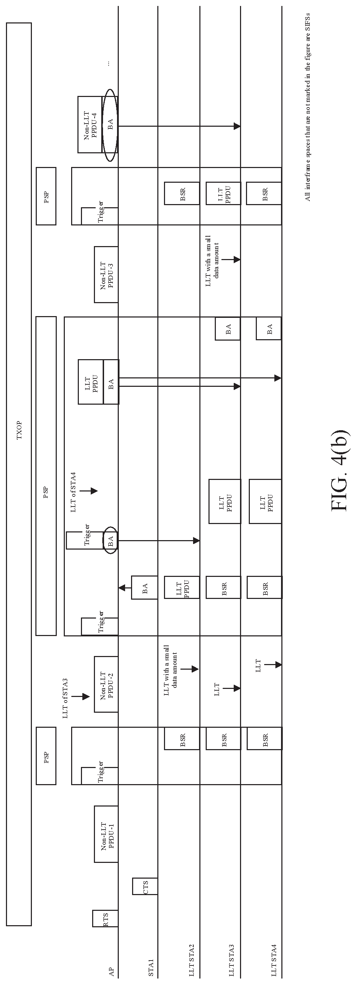

To further reduce air interface overheads, the AP is allowed to send an aggregated frame. For example, as shown in FIG. 4(b), an orthogonal frequency division multiple access (orthogonal frequency division multiple access, OFDMA) manner may be used to simultaneously transmit the trigger frame and the BA frame, or simultaneously transmit the non-LLT PPDU and the BA frame, or simultaneously transmit the LLT PPDU and the BA frame.

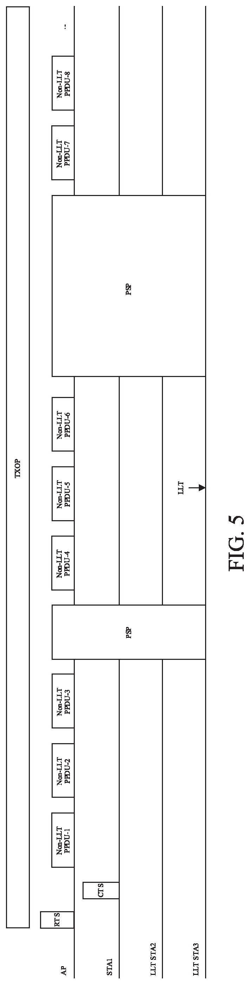

In an implementation method, in this embodiment of this application, the PSP interval may be appropriately configured based on LLT features of different application scenarios, that is, a time interval between two adjacent PSPs is configured, to reduce signaling overheads and improve medium utilization. FIG. 5 is a diagram of flexibly adjusting a PSP interval in an equal-interval preemption transmission solution. In this example, a PSP interval is 3, that is, one PSP is inserted each time three non-LLT PPDUs are transmitted. Compared with the case in which the PSP interval is 1 in FIG. 4(a) or FIG. 4(b), increasing the PSP interval can effectively reduce signaling overheads. Certainly, an example in which the PSP interval is 3 is merely used herein for description. In an actual application, the PSP interval may be flexibly configured based on a requirement.

In an implementation method, when the AP notifies the uplink transmission resource of the STA (including the LLT STA and the non-LLT STA) in any one of the following manners (1) to (5), if the uplink transmission resource, the related parameter, and the like of the STA remain unchanged, the AP may not need to send the trigger frame in the PSP, to reduce sending of the trigger frame and reduce signaling overheads.

Manner (1): Outside the TXOP, the AP and the STA exchange management frames, to specify the uplink transmission resource, the related parameter, and the like of the STA.

Manner (2): At a start moment of the TXOP, the AP sends a trigger frame, to specify the uplink transmission resource, the related parameter, and the like of the STA.

Manner (3): In a 1^{st} PSP, the AP sends a trigger frame, to specify the uplink transmission resource, the related parameter, and the like of the STA.

In any PSP, if the AP does not send a trigger frame, the STA sends uplink data by using an uplink transmission resource configured by using a management frame or a trigger frame that is received last time. When the uplink transmission resource of the STA in the PSP changes, the AP sends a trigger frame in the PSP to update the uplink transmission resource and the related parameter of the STA.

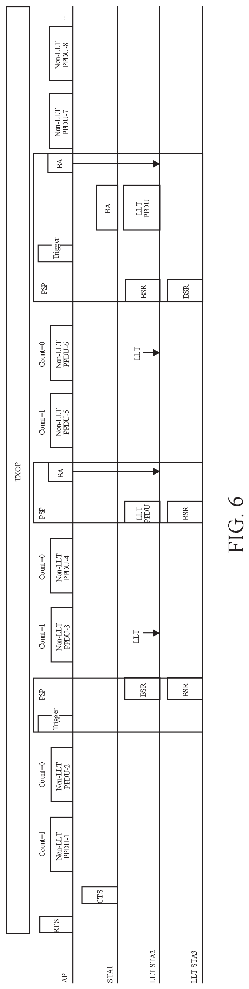

FIG. 6 is a diagram of reducing a quantity of trigger frames in an equal-interval preemption transmission solution. In a PSP, if the AP sends a trigger frame, after receiving the trigger frame, the STA transmits uplink data after an interval of an SIFS based on a specified uplink transmission resource, a related parameter, and the like. In the PSP, if the AP does not send a trigger frame, the STA determines a start moment of the PSP in any one of the following manners 1 to 5, to align uplink transmission.

Manner 1: A signal (signal, SIG) field in a non-LLT PPDU sent by the AP carries an incremental/decremental count indication. The STA detects the non-LLT PPDU. When it is detected that an incremental/decremental count indication of any non-LLT PPDU reaches a specified threshold, after transmission of the non-LLT PPDU ends, the start moment of the PSP reaches after an interval of the SIFS. Specifically, start moment of a next PSP=transmission end moment of a non-LLT PPDU+interframe space.

A decremental count is used as an example. An initial value of a counter is set to N-1, and a specified threshold is 0, where N is a quantity of non-LLT PPDUs between two adjacent PSPs. Refer to FIG. 6. N=2. When the LLT STA detects that a count (count) indication=0 in a non-LLT PPDU, it indicates that the non-LLT PPDU is a last non-LLT PPDU between two adjacent PSPs. Therefore, it may be determined that a start moment of a next PSP is equal to a sum of a transmission end moment of the non-LLT PPDU and an interframe space.

Manner 2: A SIG field in a non-LLT PPDU sent by the AP carries a 1-bit indication bit, for example, a Preemption Indication subfield. It is determined, based on a 0/1 state of the indication bit, whether a transmission end moment of the current non-LLT PPDU plus an interframe space is the start moment of the PSP.

For example, when the Preemption Indication subfield in the non-LLT PPDU is a bit 1, it indicates that the non-LLT PPDU is a last non-LLT PPDU between two adjacent PSPs. Therefore, it may be determined that a start moment of a next PSP is equal to a sum of a transmission end moment of the non-LLT PPDU and an interframe space.

Manner 3: Starting from a start moment of the TXOP or an end moment of any PSP in which the trigger frame is detected, the STA detects a non-LLT PPDU and performs an incremental/decremental count. When a count value reaches a specified threshold, after transmission of the non-LLT PPDU ends, the start moment of the PSP reaches after an interval of an interframe space.

In Manner 3, the STA autonomously detects whether the non-LLT PPDU is a last non-LLT PPDU between two adjacent PSPs, and if determining that the non-LLT PPDU is the last non-LLT PPDU between the two adjacent PSPs, determines that a start moment of a next PSP is equal to a sum of a transmission end moment of the non-LLT PPDU and an interframe space.

In Manner 3, the LLT STA uses the following method a or method b to avoid counting LLT PPDUs, so as to avoid incorrectly calculating a quantity of non-LLT PPDUs between two adjacent PSPs.

Method a: A 1-bit indication bit is added to a SIG field in a PPDU, to distinguish a non-LLT PPDU from an LLT PPDU.

Method b: The LLT STA ignores a PPDU count in the PSP because all PPDUs in the PSP are LLT PPDUs.

Manner 4: The AP sends a control frame, a management frame, or the like, to notify a periodic PSP parameter, that is, duration between PSPs remains unchanged.

Manner 5: In the PSP, the AP sends a trigger frame to notify a next PSP parameter, where the trigger frame includes a start moment of a next PSP or includes a time interval between a start moment of a current PSP and a start moment of a next PSP. In addition, in the TXOP, a 1^{st} PSP parameter may be notified by using a control frame at a start moment of the TXOP, or may be notified by the AP by sending a management frame before a 1^{st} PSP in the TXOP.

In an implementation method, if the AP does not transmit the trigger frame in the PSP, to avoid impact of a hidden node, at a start moment of the PSP, the STA (including the LLT STA and the non-LLT STA) does not detect whether a channel is busy or idle, and directly send an uplink transmission frame. If the AP may transmit the trigger frame in a part of PSPs, a method needs to be designed to avoid a conflict between the uplink transmission frame of the STA at the start moment of the PSP and the trigger frame sent by the AP. In a possible solution, in a specified interval (for example, an SIFS) after the start moment of the PSP, if the STA does not detect the trigger frame, the STA sends uplink data; or if the STA detects the trigger frame, the STA sends uplink data based on the uplink transmission resource configured by using the trigger frame.

### Second part: Unequal-interval preemption transmission solution

In an implementation method, to reduce signaling overheads, a quantity of PSPs may be reduced, that is, the PSP appears aperiodically. Specifically, a quantity of non-LLT PPDUs between adjacent PSPs is not fixed, that is, the PSP appears at an unequal interval. In the unequal-interval preemption transmission solution, a PSP interval is not specified, and the LLT STA initiates the PSP, that is, a PSP may be inserted after any non-LLT PPDU. FIG. 7 is a diagram of an unequal-interval preemption transmission solution.

If the LLT STA buffers UL LLT data, after transmission of a non-LLT PPDU is completed, a PSP is inserted after a specified interval (for example, a slot1), to report a BSR frame, perform preemption transmission of the UL LLT data, or the like. An interframe space between the non-LLT PPDU and the PSP, and an interframe space in the PSP are both the slot1. Generally, the slot1 is set to an SIFS. A transmission rule in the PSP is similar to that in the equal-interval solution. When a data amount of UL LLT is small, the LLT STA transmits UL LLT data by using an allocated uplink transmission resource, for example, the LLT STA3 in FIG. 7. When a data amount of UL LLT is large, the LLT STA reports a BSR frame by using an allocated uplink transmission resource. After receiving the BSR frame, the AP transmits a trigger frame after an interval of the SIFS, to trigger the LLT STA to perform uplink preemption transmission, for example, the LLT STA4 in FIG. 7. In the PSP, the AP is allowed to allocate a small quantity of uplink transmission resources to the non-LLT STA for reporting a BA frame.

If the AP has buffered DL LLT data, after transmission of the non-LLT PPDU is completed, a PSP is inserted after a specified interval (for example, the specified interval is a modified interframe space (modified interframe space, MIFS) and MIFS=slot1+slot2), to perform preemption transmission of the DL LLT data. Values of the slot1 and the slot2 may be flexibly configured. For example, the MIFS is not less than time for two times of AP transmitting/receiving switching. After transmitting any non-LLT PPDU, the AP detects, after an interval of the slot1 (for example, slot1=SIFS), whether an uplink signal is present on the uplink transmission resource allocated to the LLT STA. If the uplink signal is present, a PSP is inserted after the non-LLT PPDU, and the AP receives uplink transmission data in the PSP. If the uplink signal is absent and the AP has buffered DL LLT, a PSP is inserted after an interval of the slot2, and a DL LLT PPDU is transmitted to one or more LLT STAs in the PSP. If the uplink signal is absent and the AP does not buffer DL LLT, the non-LLT PPDU continues to be transmitted after an interval of the slot2. The LLT STA determines a start moment of the PSP by detecting the non-LLT PPDU.

In an implementation method, the AP may add a preemption transmission indication to PPDUs (including a non-LLT PPDU and an LLT PPDU). For example, a 1-bit Preemption Indication subfield is added to a SIG field, to indicate whether preemption transmission of low latency traffic is allowed after transmission of a current PPDU ends. FIG. 8 is another diagram of an unequal-interval preemption transmission solution. The Preemption Indication subfield is set to 1, to indicate that preemption transmission of the low latency traffic is allowed after transmission of the current PPDU ends. The Preemption Indication subfield is set to 0, to indicate that preemption transmission of the low latency traffic is not allowed after transmission of the current PPDU ends. When the LLT STA detects that a Preemption Indication subfield of any PPDU is set to 1, it is determined that preemption transmission is allowed in a specified interval after the current PPDU ends. When a value of a Preemption Indication field of a PPDU is 0, an interframe space between the PPDU and a next frame is an SIFS. When a value of a Preemption Indication field of a PPDU is 1 and preemption transmission of the low latency traffic is not performed after the PPDU ends, an interframe space between the PPDU and a next frame is an MIFS. When a value of a Preemption Indication field of a PPDU is 1 and preemption transmission of the low latency traffic is performed after the PPDU ends, an interframe space between the PPDU and a next frame is a slot1. For meanings of the MIFS, the slot1, and the SIFS, refer to the foregoing descriptions.

If the AP does not transmit the trigger frame at the start moment of the PSP, the STA may determine the start moment of the PSP in any one of the following manners, to align uplink transmission:

Manner 1: If the LLT STA has buffered UL LLT data, the LLT STA may preempt a channel to transmit a UL LLT PPDU or a BSR frame after an interval of the slot1 (for example, the SIFS) after transmission of the PPDU ends.

Manner 2: If the LLT STA does not buffer UL LLT data, the LLT STA may detect, after an interval of the slot1 (for example, the SIFS) after transmission of the PPDU ends, whether a trigger frame (used to request an LLT STA reporting a BSR frame at a start moment of the PSP to transmit the UL LLT data) or a DL LLT PPDU is present.

### Third part: RPD transmission solution

The following describes the RPD solution with reference to FIG. 9 to FIG. 11.

FIG. 9 is a diagram of an RPD solution. In this example, the AP is an initiator of a TXOP. Preemption transmission of an LLT PPDU sent by the AP may be performed between any two non-LLT PPDUs, and preemption transmission of a remaining LLT PPDU is performed only in a PSP. In the PSP, the AP sends a trigger frame to request the LLT STA to report a low latency traffic report frame, such as a BSR frame. The trigger frame may be further used to notify a next PSP parameter. If the PSP is a periodic PSP, a PSP parameter is still used, and the next PSP parameter does not need to be separately notified in the trigger frame. In the PSP, the AP may schedule the STA1 to reply with a BA frame. For example, in the TXOP, the AP and the STA1 exchange management frames, to negotiate that preemption transmission is supported/rejected in the current TXOP. After it is determined through negotiation that preemption transmission of low latency traffic is supported in the current TXOP, the AP sends a management frame to notify the LLT STA2 to the LLT STA4 that preemption transmission of the low latency traffic is supported in the current TXOP, and notifies a PSP parameter. The management frame may be a trigger frame for requesting a reply, an action frame that does not need to be replied, or the like. Optionally, an interframe space in this example is an SIFS, to prevent another STA from preempting a channel due to an excessively long interframe space.

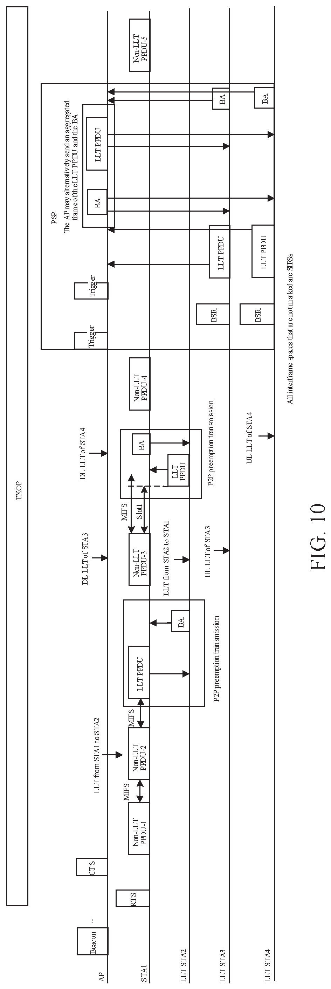

FIG. 10 is another diagram of an RPD solution. In this example, the STA is an initiator of a TXOP. If peer-to-peer (peer-to-peer, P2P) communication is present between the STA1 and the LLT STA2, preemption transmission of an LLT PPDU sent by the STA1 may be performed between any two non-LLT PPDUs, and preemption transmission of a remaining LLT PPDU is performed only in a PSP. If an initiator of a TXOP (that is, the STA1) serves as a receiver of P2P communication, preemption transmission of an LLT PPDU received by the STA1 may be performed between any two non-LLT PPDUs. If preemption transmission of the LLT PPDU received by the STA1 is allowed in the TXOP, an interframe space of the non-LLT PPDU is an MIFS. If preemption transmission of the LLT PPDU received by the STA1 is not allowed in the TXOP, an interframe space is an SIFS. In the PSP, the AP may send an individually addressed BA frame, or the AP replies with a BA frame to the STA1 in an OFDMA manner.

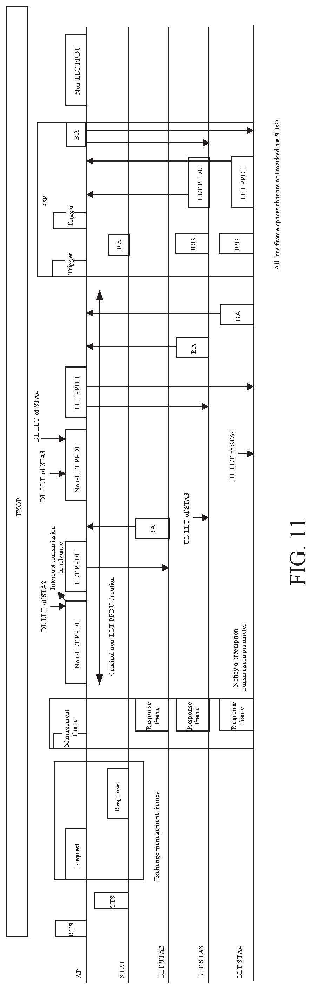

FIG. 11 is another diagram of an RPD solution. In this example, the AP is an initiator of a TXOP, and may interrupt non-LLT PPDU transmission in advance. When preemption transmission of UL/DL LLT is absent, only one non-LLT PPDU is transmitted between PSPs. This effectively reduces air interface overheads caused by a preamble symbol and an interframe space of the non-LLT PPDU. Duration of the non-LLT PPDU is determined based on a PSP interval. When the initiator of the TXOP buffers to-be-transmitted LLT data, the initiator of the TXOP interrupts current non-LLT PPDU transmission, and performs preemption transmission of an LLT PPDU after an interval of an SIFS. After transmission of the LLT PPDU is completed, the initiator of the TXOP continues to transmit the non-LLT PPDU after an interval of the SIFS, and determines duration of the non-LLT PPDU within remaining time until a start moment of a next PSP. It is noted that transmission of the non-LLT PPDU should end before the start moment of the PSP. Preemption transmission of LLT data sent by a non-initiator of the TXOP is allowed only in the PSP. An interframe space is an SIFS, to prevent another STA from preempting a channel due to an excessively long interframe space. In addition, to reduce air interface overheads caused by a preamble symbol, the interframe space, and the like, a complete preamble symbol may be transmitted only in a 1^{st} non-LLT PPDU between adjacent PSPs, and a preamble symbol of another non-LLT PPDU is truncated in one or more of the following manners: (1) reducing duration such as a non-high throughput (High Throughput, HT) short training field (non-HT Short Training field, L-STF), a non-HT long training field (non-HT Long Training field, L-LTF), an ultrahigh reliability (Ultrahigh reliability, UHR) short training field (UHR Short Training field, UHR-STF), and an ultrahigh reliability long training field (UHR Long Training field, UHR-LTF); and (2) deleting a part or all of fields such as a non-HT signal field (non-HT SIGNAL field, L-SIG), a repeated non-HT signal field (Repeated non-HT SIGNAL field, RL-SIG), a universal signal field (Universal SIGNAL field, U-SIG), and an ultrahigh reliability signal field (UHR SIGNAL field, UHR-SIG).

In an implementation method, for an unequal-interval preemption transmission solution, when the AP allocates a specified RU for preemption transmission to the LLT STA in the PSP, if the AP detects only whether a preemption transmission signal is present on a primary channel of 20 MHz, the AP needs to allocate specified RUs to different LLT STAs on the primary channel of 20 MHz. An existing protocol supports a maximum of nine LLT STAs. For example, to expand a quantity of LLT STAs, the LLT STAs may be grouped, and an RU is allocated to each group of STAs on the primary channel of 20 MHz. Each RU is specified only for a group. STAs in a same group contend for a same RU to access a channel. If the AP detects that a signal is transmitted on an RU for any specified group, the AP allocates an uplink transmission resource to all STAs in the group. If the AP detects whether a preemption transmission signal is present on the primary channel of 20 MHz and a secondary channel of 20 MHz, the AP may allocate specified RUs to different LLT STAs on the two channels of 20 MHz. The existing protocol supports a maximum of 18 LLT STAs. If the AP detects whether a preemption transmission signal is present in an entire bandwidth, the AP may allocate specified RUs to different LLT STAs in the entire bandwidth. The existing protocol supports a maximum of 72 LLT STAs (corresponding to 160 MHz) or 144 LLT STAs (corresponding to 320 MHz).

### Fourth part: Uplink transmission resource allocation solution in the PSP

FIG. 12 is an example diagram of allocation of an uplink transmission resource in a PSP. In this example, an uplink transmission resource includes one or more RUs. Attributes and identifiers of the STA1 to the STA4 are shown in Table 1. An identifier of a STA is represented by an association identifier (association identifier, AID).

**Table 1**

| User | Whether to transmit LLT | AID value |
|---|---|---|
| STA1 | No | 5 |
| STA2 | Yes | 8 |
| STA3 | Yes | 10 |
| STA4 | Yes | 15 |

In the PSP, the trigger frame indicates at least one of the following RUs:
(1) Specified RU of the LLT STA, used by the LLT STA to report a BSR frame, transmit a UL LLT PPDU, and the like.
   Refer to FIG. 12. The specified RU of the LLT STA includes exclusive transmission resources of the STA2 to the STA4.
(2) Associated-user random access RU (AID=0), used by an associated user to transmit uplink data through contention.
   The RU corresponding to AID=0 may be used by a plurality of STAs associated with the AP through contention. Refer to FIG. 12. The AP is associated with the STA1 to the STA4, and the RU that is allocated by the AP and corresponding to AID=0 may be used by the STA1 to the STA4 through contention. For example, if the STA1 obtains the RU through contention, the RU is used by the STA1.
(3) Unassociated-user random access RU (AID=2045), used by an unassociated user for contention-based network access.
   The RU corresponding to AID=2045 may be used by a STA that is not associated with the AP for contention-based network access, to be associated with the AP. For example, a STA5 uses the RU corresponding to AID=2045 for contention-based network access, and STAs associated with the AP after network access include the STA1 to the STAS.
(4) Specified RU of the non-LLT STA, used by the non-LLT STA to report a BA frame.
   Refer to FIG. 12. The specified RU of the non-LLT STA includes an exclusive transmission resource of the STA1.

In an implementation method, a protocol may specify an RU allocation pattern for preemption transmission, that is, different RU allocation solutions are used in different PSPs, to avoid user collision and improve an anti-interference capability. FIG. 13 is a diagram of a pattern-based RU allocation solution. The AP and the LLT STA may negotiate an RU allocation pattern by using a management frame. In a TXOP, the LLT STA uses different RU allocation solutions in turn in different PSPs based on the negotiated RU allocation pattern. Three examples are given in FIG. 13. In Example 1, a tone (tone) is 26-tone, and shift of RU resource allocation is performed by using a cyclic shift interval being 1. In Example 2, a tone (tone) is 26-tone, and shift of RU resource allocation is performed by using a cyclic shift interval being 2. In Example 3, a tone (tone) is 52-tone, and shift of RU resource allocation is performed by using a cyclic shift interval being 1.

In an implementation method, to reduce mutual interference between LLT STAs, the AP may flexibly allocate specified RUs on different sub-channels based on locations (such as a digital map), signal strength (such as an RSSI), and the like of the LLT STAs. For example, the AP may allocate neighboring RUs to STAs that are geographically distant and have similar received signal strength indications (received signal strength indication, RSSI). The AP may allocate RUs on different sub-channels to STAs that are geographically close and have similar RSSIs.

It may be understood that, to implement the functions in the foregoing embodiments, the terminal device or the network device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

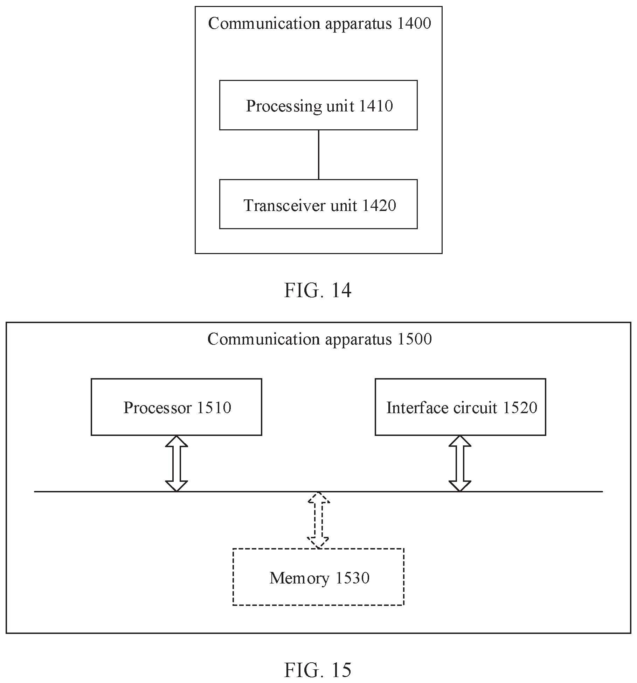

FIG. 14 and FIG. 15 are diagrams of possible structures of communication apparatuses according to embodiments of this application. The communication apparatuses may be configured to implement a function of the terminal device or the network device in the foregoing method embodiments. Therefore, beneficial effects of the foregoing method embodiments can also be implemented. In embodiments of this application, the communication apparatus may be a terminal device, or may be a network device, or may be a module (for example, a chip) used in the terminal device or the network device.

A communication apparatus 1400 shown in FIG. 14 includes a processing unit 1410 and a transceiver unit 1420. The communication apparatus 1400 is configured to implement a function of the terminal device or the network device in the foregoing method embodiments.

When the communication apparatus 1400 is configured to implement a function of the network device (for example, the AP) in the foregoing method embodiments, the processing unit 1410 is configured to control the transceiver unit 1420 to send a first frame, where the first frame indicates a first uplink transmission resource; and receive a first uplink low latency traffic frame or a low latency traffic report frame from at least one terminal device in a transmit opportunity window on the first uplink transmission resource, where the transmit opportunity window is available for transmitting a non-low latency traffic frame.

In a possible implementation method, that the processing unit 1410 is configured to control the transceiver unit 1420 to send the first frame specifically includes: sending the first frame in a first time period of the transmit opportunity window; and that the processing unit 1410 is configured to control the transceiver unit 1420 to receive the first uplink low latency traffic frame from the at least one terminal device in the transmit opportunity window on the first uplink transmission resource specifically includes: receiving the first uplink low latency traffic frame from the at least one terminal device in the first time period on the first uplink transmission resource, where a data amount of the first uplink low latency traffic frame is less than a first threshold.

In a possible implementation method, the low latency traffic report frame indicates a data amount of to-be-transmitted uplink low latency traffic. The processing unit 1410 is further configured to control the transceiver unit 1420 to send a second frame in a second time period of the transmit opportunity window, where the second frame indicates a second uplink transmission resource, and the second uplink transmission resource is determined based on the low latency traffic report frame; and receive a second uplink low latency traffic frame from the at least one terminal device in the second time period on the second uplink transmission resource, where the second uplink low latency traffic frame is used to transmit the to-be-transmitted uplink low latency traffic.

In a possible implementation method, the processing unit 1410 is further configured to control the transceiver unit 1420 to send an aggregated frame to the at least one terminal device in the transmit opportunity window, where the aggregated frame includes an acknowledgment frame for the first uplink low latency traffic frame and an acknowledgment frame for the second uplink low latency traffic frame.

In a possible implementation method, the processing unit 1410 is further configured to control the transceiver unit 1420 to send a downlink low latency traffic frame in a third time period of the transmit opportunity window, where the downlink low latency traffic frame includes data of downlink traffic and a transmission resource indication, and the transmission resource indication indicates a transmission resource for the data of the downlink low latency traffic.

In a possible implementation method, the processing unit 1410 is further configured to control the transceiver unit 1420 to send a third frame in the transmit opportunity window, where the third frame carries a preemption transmission indication, and the preemption transmission indication indicates whether preemption transmission of low latency traffic is allowed after transmission of the third frame ends.

In a possible implementation method, a time period used to send an uplink low latency traffic frame or a low latency traffic report frame is present after each fixed quantity of non-low latency traffic frames in the transmit opportunity window.

In a possible implementation method, the transmit opportunity window does not include a frame indicating an uplink transmission resource other than the first frame.

In a possible implementation method, that the processing unit 1410 is configured to control the transceiver unit 1420 to send the first frame specifically includes: sending the first frame before the transmit opportunity window.

In a possible implementation method, the processing unit 1410 is further configured to control the transceiver unit 1420 to send a beacon frame to the at least one terminal device, where the beacon frame indicates that preemption transmission of the low latency traffic is supported in the transmit opportunity window.

In a possible implementation method, the processing unit 1410 is further configured to control the transceiver unit 1420 to send a management frame, where the management frame is used to negotiate whether preemption transmission of the low latency traffic is supported in the transmit opportunity window; and receive a response frame, where the response frame indicates that preemption transmission of the low latency traffic is supported in the transmit opportunity window.

In a possible implementation method, the processing unit 1410 is further configured to control the transceiver unit 1420 to receive a management frame, where the management frame indicates that preemption transmission of the low latency traffic is supported in the transmit opportunity window.

In a possible implementation method, if the network device is an initiator of the transmit opportunity window, preemption transmission of a downlink low latency traffic frame sent by the transceiver unit 1420 is capable of being performed between any two downlink non-low latency traffic frames, and preemption transmission of an uplink low latency traffic frame received by the transceiver unit 1420 is performed only in a specified time period of the transmit opportunity window.

In a possible implementation method, the processing unit 1410 is further configured to control the transceiver unit 1420 to send a fourth frame in the specified time period, where the fourth frame is used to request the at least one terminal device to report a low latency traffic report.

In a possible implementation method, the fourth frame further indicates a next specified time period.

In a possible implementation method, if the network device is an initiator of the transmit opportunity window, a non-low latency traffic frame sent by the transceiver unit 1420 is capable of being interrupted, to perform preemption transmission of a low latency traffic frame, and after transmission of the low latency traffic frame is completed, the non-low latency traffic frame continues to be transmitted.

In a possible implementation method, a plurality of non-low latency traffic frames are present between two adjacent specified time periods in the transmission active window, a 1^{st} non-low latency traffic frame in the plurality of non-low latency traffic frames includes a complete preamble symbol, and another non-low latency traffic frame in the plurality of non-low latency traffic frames includes a truncated preamble symbol.

When the communication apparatus 1400 is configured to implement a function of the network device (for example, the AP) in the foregoing method embodiments, the processing unit 1410 is configured to control the transceiver unit 1420 to send a communication frame to at least one terminal device in a transmit opportunity window, where the communication frame includes indication information and downlink low latency traffic data, the indication information indicates a transmission resource for the downlink low latency traffic data, and the transmit opportunity window is available for transmitting a non-low latency traffic frame.

When the communication apparatus 1400 is configured to implement a function of the terminal device (for example, the LLT STA) in the foregoing method embodiments, the processing unit 1410 is configured to control the transceiver unit 1420 to receive a first frame, where the first frame indicates a first uplink transmission resource; and send a first uplink low latency traffic frame or a low latency traffic report frame in a transmit opportunity window on the first uplink transmission resource, where the transmit opportunity window is available for transmitting a non-low latency traffic frame.

In a possible implementation method, that the processing unit 1410 is configured to control the transceiver unit 1420 to receive the first frame specifically includes: receiving the first frame in a first time period of the transmit opportunity window; and that the processing unit 1410 is configured to control the transceiver unit 1420 to send the first uplink low latency traffic frame in the transmit opportunity window on the first uplink transmission resource specifically includes: sending the first uplink low latency traffic frame in the first time period on the first uplink transmission resource, where a data amount of the first uplink low latency traffic frame is less than a first threshold.

In a possible implementation method, the low latency traffic report frame indicates a data amount of to-be-transmitted uplink low latency traffic. The processing unit 1410 is further configured to control the transceiver unit 1420 to receive a second frame in a second time period of the transmit opportunity window, where the second frame indicates a second uplink transmission resource, and the second uplink transmission resource is determined based on the low latency traffic report frame; and send a second uplink low latency traffic frame in the second time period on the second uplink transmission resource, where the second uplink low latency traffic frame is used to transmit the to-be-transmitted uplink low latency traffic.

In a possible implementation method, the processing unit 1410 is further configured to control the transceiver unit 1420 to receive an aggregated frame in the transmit opportunity window, where the aggregated frame includes an acknowledgment frame for the first uplink low latency traffic frame and an acknowledgment frame for the second uplink low latency traffic frame.

In a possible implementation method, the processing unit 1410 is further configured to control the transceiver unit 1420 to receive a downlink low latency traffic frame in a third time period of the transmit opportunity window, where the downlink low latency traffic frame includes data of downlink traffic and a transmission resource indication, and the transmission resource indication indicates a transmission resource for the data of the downlink low latency traffic.

In a possible implementation method, the processing unit 1410 is further configured to control the transceiver unit 1420 to receive a third frame in the transmit opportunity window, where the third frame carries a preemption transmission indication, and the preemption transmission indication indicates whether preemption transmission of low latency traffic is allowed after transmission of the third frame ends.

In a possible implementation method, a time period used to send an uplink low latency traffic frame or a low latency traffic report frame is present after each fixed quantity of non-low latency traffic frames in the transmit opportunity window.

In a possible implementation method, the transmit opportunity window does not include a frame indicating an uplink transmission resource other than the first frame.

In a possible implementation method, that the processing unit 1410 is configured to control the transceiver unit 1420 to receive the first frame specifically includes: receiving the first frame before the transmit opportunity window.

In a possible implementation method, the processing unit 1410 is further configured to control the transceiver unit 1420 to receive a beacon frame, where the beacon frame indicates that preemption transmission of the low latency traffic is supported in the transmit opportunity window.

In a possible implementation method, the processing unit 1410 is further configured to control the transceiver unit 1420 to receive a management frame, where the management frame is used to negotiate whether preemption transmission of the low latency traffic is supported in the transmit opportunity window; and send a response frame, where the response frame indicates that preemption transmission of the low latency traffic is supported in the transmit opportunity window.

In a possible implementation method, the processing unit 1410 is further configured to control the transceiver unit 1420 to send a management frame, where the management frame indicates that preemption transmission of the low latency traffic is supported in the transmit opportunity window.

In a possible implementation method, if the terminal device is an initiator of the transmit opportunity window, preemption transmission of a low latency traffic frame received or sent by the transceiver unit 1420 is capable of being performed between any two non-low latency traffic frames, and preemption transmission of another low latency traffic frame is performed only in a specified time period of the transmit opportunity window.

In a possible implementation method, if the terminal device is an initiator of the transmit opportunity window, a non-low latency traffic frame sent by the transceiver unit 1420 is capable of being interrupted, to perform preemption transmission of a low latency traffic frame, and after transmission of the low latency traffic frame is completed, the non-low latency traffic frame continues to be transmitted.

In a possible implementation method, a plurality of non-low latency traffic frames are present between two adjacent specified time periods in the transmission active window, a 1^{st} non-low latency traffic frame in the plurality of non-low latency traffic frames includes a complete preamble symbol, and another non-low latency traffic frame in the plurality of non-low latency traffic frames includes a truncated preamble symbol.

For more detailed descriptions about the processing unit 1410 and the transceiver unit 1420, directly refer to related descriptions in the foregoing method embodiments. Details are not described herein again.

A communication apparatus 1500 shown in FIG. 15 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, input data needed by the processor 1510 to run instructions, or data generated after the processor 1510 runs instructions.

When the communication apparatus 1500 is configured to implement the foregoing method embodiments, the processor 1510 is configured to implement the functions of the processing unit 1410, and the interface circuit 1520 is configured to implement the functions of the transceiver unit 1420.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any conventional processor, or the like.

The method steps in embodiments of this application may be implemented in a hardware manner, or may be implemented in a manner of executing software instructions by the processor. The software instruction may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in the terminal device or the network device. Certainly, the processor and the storage medium may also exist in the access network device or the terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. The computer program (computer program) is a set of instructions that indicate each step of an electronic computer or another device having a message processing capability, and is usually written in a program design language and run on a target architecture. When the computer program or instructions are loaded and executed on a computer, all or some of the procedures or functions described in embodiments of this application are performed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a network device in a wireless fidelity Wi-Fi system, wherein the method comprises:
sending a first frame, wherein the first frame indicates a first uplink transmission resource; and
receiving a first uplink low latency traffic frame or a low latency traffic report frame from at least one terminal device in a transmit opportunity window on the first uplink transmission resource, wherein the transmit opportunity window is available for transmitting a non-low latency traffic frame.

2. The method according to claim 1, wherein the sending the first frame comprises:
sending the first frame in a first time period of the transmit opportunity window; and
the receiving the first uplink low latency traffic frame from the at least one terminal device in the transmit opportunity window on the first uplink transmission resource comprises:
receiving the first uplink low latency traffic frame from the at least one terminal device in the first time period on the first uplink transmission resource, wherein a data amount of the first uplink low latency traffic frame is less than a first threshold.

3. The method according to claim 1 or 2, wherein the low latency traffic report frame indicates a data amount of to-be-transmitted uplink low latency traffic; and
the method further comprises:
sending a second frame in a second time period of the transmit opportunity window, wherein the second frame indicates a second uplink transmission resource, and the second uplink transmission resource is determined based on the low latency traffic report frame; and
receiving a second uplink low latency traffic frame from the at least one terminal device in the second time period on the second uplink transmission resource, wherein the second uplink low latency traffic frame is used to transmit the to-be-transmitted uplink low latency traffic.

4. The method according to claim 3, wherein the method further comprises:
sending an aggregated frame to the at least one terminal device in the transmit opportunity window, wherein the aggregated frame comprises an acknowledgment frame for the first uplink low latency traffic frame and an acknowledgment frame for the second uplink low latency traffic frame.

5. The method according to any one of claims 1 to 4, wherein the method further comprises:
sending a downlink low latency traffic frame in a third time period of the transmit opportunity window, wherein the downlink low latency traffic frame comprises data of downlink low latency traffic and a transmission resource indication, and the transmission resource indication indicates a transmission resource for the data of the downlink low latency traffic.

6. The method according to any one of claims 1 to 5, wherein the method further comprises:
sending a third frame in the transmit opportunity window, wherein the third frame carries a preemption transmission indication, and the preemption transmission indication indicates whether preemption transmission of low latency traffic is allowed after transmission of the third frame ends.

7. The method according to any one of claims 1 to 6, wherein a time period used to send an uplink low latency traffic frame or a low latency traffic report frame is present after each fixed quantity of non-low latency traffic frames in the transmit opportunity window.

8. The method according to claim 1 or 2, wherein the transmit opportunity window does not comprise a frame indicating an uplink transmission resource other than the first frame.

9. The method according to claim 1, wherein the sending the first frame comprises:
sending the first frame before the transmit opportunity window.

10. The method according to any one of claims 1 to 9, wherein the method further comprises:
sending a beacon frame to the at least one terminal device, wherein the beacon frame indicates that preemption transmission of the low latency traffic is supported in the transmit opportunity window.

11. The method according to any one of claims 1 to 9, wherein the method further comprises:
sending a management frame, wherein the management frame is used to negotiate whether preemption transmission of the low latency traffic is supported in the transmit opportunity window; and
receiving a response frame, wherein the response frame indicates that preemption transmission of the low latency traffic is supported in the transmit opportunity window.

12. The method according to any one of claims 1 to 9, wherein the method further comprises:
receiving a management frame, wherein the management frame indicates that preemption transmission of the low latency traffic is supported in the transmit opportunity window.

13. The method according to any one of claims 1 to 12, wherein
if the network device is an initiator of the transmit opportunity window, preemption transmission of a downlink low latency traffic frame sent by the network device is capable of being performed between any two downlink non-low latency traffic frames, and preemption transmission of an uplink low latency traffic frame received by the network device is performed only in a specified time period of the transmit opportunity window.

14. The method according to claim 13, wherein the method further comprises:
sending a fourth frame in the specified time period, wherein the fourth frame is used to request the at least one terminal device to report a low latency traffic report.

15. The method according to claim 14, wherein the fourth frame further indicates a next specified time period.

16. The method according to any one of claims 1 to 12, wherein
if the network device is an initiator of the transmit opportunity window, a non-low latency traffic frame sent by the network device is capable of being interrupted, to perform preemption transmission of a low latency traffic frame, and after transmission of the low latency traffic frame is completed, the non-low latency traffic frame continues to be transmitted.

17. The method according to any one of claims 1 to 16, wherein a plurality of non-low latency traffic frames are present between two adjacent specified time periods in the transmission active window, a 1^{st} non-low latency traffic frame in the plurality of non-low latency traffic frames comprises a complete preamble symbol, and another non-low latency traffic frame in the plurality of non-low latency traffic frames comprises a truncated preamble symbol.

18. A communication method, applied to a terminal device in a wireless fidelity Wi-Fi system, wherein the method comprises:
receiving a first frame, wherein the first frame indicates a first uplink transmission resource; and
sending a first uplink low latency traffic frame or a low latency traffic report frame in a transmit opportunity window on the first uplink transmission resource, wherein the transmit opportunity window is available for transmitting a non-low latency traffic frame.

19. The method according to claim 18, wherein the receiving the first frame comprises:
receiving the first frame in a first time period of the transmit opportunity window; and
the sending the first uplink low latency traffic frame in the transmit opportunity window on the first uplink transmission resource comprises:
sending the first uplink low latency traffic frame in the first time period on the first uplink transmission resource, wherein a data amount of the first uplink low latency traffic frame is less than a first threshold.

20. The method according to claim 18 or 19, wherein the low latency traffic report frame indicates a data amount of to-be-transmitted uplink low latency traffic; and
the method further comprises:
receiving a second frame in a second time period of the transmit opportunity window, wherein the second frame indicates a second uplink transmission resource, and the second uplink transmission resource is determined based on the low latency traffic report frame; and
sending a second uplink low latency traffic frame in the second time period on the second uplink transmission resource, wherein the second uplink low latency traffic frame is used to transmit the to-be-transmitted uplink low latency traffic.

21. The method according to claim 20, wherein the method further comprises:
receiving an aggregated frame in the transmit opportunity window, wherein the aggregated frame comprises an acknowledgment frame for the first uplink low latency traffic frame and an acknowledgment frame for the second uplink low latency traffic frame.

22. The method according to any one of claims 18 to 21, wherein the method further comprises:
receiving a downlink low latency traffic frame in a third time period of the transmit opportunity window, wherein the downlink low latency traffic frame comprises data of downlink low latency traffic and a transmission resource indication, and the transmission resource indication indicates a transmission resource for the data of the downlink low latency traffic.

23. The method according to any one of claims 18 to 21, wherein the method further comprises:
receiving a third frame in the transmit opportunity window, wherein the third frame carries a preemption transmission indication, and the preemption transmission indication indicates whether preemption transmission of low latency traffic is allowed after transmission of the third frame ends.

24. The method according to any one of claims 18 to 23, wherein a time period used to send an uplink low latency traffic frame or a low latency traffic report frame is present after each fixed quantity of non-low latency traffic frames in the transmit opportunity window.

25. The method according to claim 18 or 19, wherein the transmit opportunity window does not comprise a frame indicating an uplink transmission resource other than the first frame.

26. The method according to claim 18, wherein the receiving the first frame comprises:
receiving the first frame before the transmit opportunity window.

27. The method according to any one of claims 18 to 26, wherein the method further comprises:
receiving a beacon frame, wherein the beacon frame indicates that preemption transmission of the low latency traffic is supported in the transmit opportunity window.

28. The method according to any one of claims 18 to 26, wherein the method further comprises:
receiving a management frame, wherein the management frame is used to negotiate whether preemption transmission of the low latency traffic is supported in the transmit opportunity window; and
sending a response frame, wherein the response frame indicates that preemption transmission of the low latency traffic is supported in the transmit opportunity window.

29. The method according to any one of claims 18 to 26, wherein the method further comprises:
sending a management frame, wherein the management frame indicates that preemption transmission of the low latency traffic is supported in the transmit opportunity window.

30. The method according to any one of claims 18 to 29, wherein
if the terminal device is an initiator of the transmit opportunity window, preemption transmission of a low latency traffic frame received or sent by the terminal device is capable of being performed between any two non-low latency traffic frames, and preemption transmission of another low latency traffic frame is performed only in a specified time period of the transmit opportunity window.

31. The method according to any one of claims 18 to 29, wherein
if the terminal device is an initiator of the transmit opportunity window, a non-low latency traffic frame sent by the terminal device is capable of being interrupted, to perform preemption transmission of a low latency traffic frame, and after transmission of the low latency traffic frame is completed, the non-low latency traffic frame continues to be transmitted.

32. The method according to any one of claims 18 to 31, wherein a plurality of non-low latency traffic frames are present between two adjacent specified time periods in the transmission active window, a 1^{st} non-low latency traffic frame in the plurality of non-low latency traffic frames comprises a complete preamble symbol, and another non-low latency traffic frame in the plurality of non-low latency traffic frames comprises a truncated preamble symbol.

33. A communication apparatus, comprising a processor and an interface circuit, wherein the processor is configured to communicate with another apparatus through the interface circuit, and perform the method according to any one of claims 1 to 17 or the method according to any one of claims 18 to 32.

34. A computer program product, wherein the computer program product comprises instructions, and when the instructions are run on a processor, the processor is enabled to perform the method according to any one of claims 1 to 17 or the method according to any one of claims 18 to 32.

35. A computer-readable storage medium, wherein the storage medium stores a computer program or instructions, and when the computer program or the instructions are executed by a communication apparatus, the method according to any one of claims 1 to 17 or the method according to any one of claims 18 to 32 is implemented.

36. A communication system, comprising a network device configured to perform the method according to any one of claims 1 to 17, and a terminal device configured to perform the method according to any one of claims 18 to 32.
